# EUROPEAN PATENT APPLICATION

(11) **EP 4 575 427 A1**
(43) Date of publication of application: **25.06.2025**
(21) Application number: 23217412.8
(22) Date of filing: 18.12.2023
(51) Int. Cl.: G01J 1/42, H01L 31/024, H04B 10/70, H04L 9/08, G01J 1/44

(54) **PHOTON DETECTION IN QUANTUM CRYPTOGRAPHY**

(71) Applicant: ID Quantique S.A., 1227 Genève (CH)
(72) Inventor: BUSSIÈRES, Félix, 1964 Conthey (CH); RESTA, Giovanni Vincenzo, 1205 Genève (CH)
(74) Representative: KATZAROV S.A.

(57) **Abstract**

The present invention relates to Superconducting Nanowire Photon Detector comprising a substrate, and a plurality of pixels provided on said substrate, wherein the pixels are separated from each other by a first linear distance, and characterized in that said substrate presents a concave surface profile between two pixels to present a length greater than said first linear distance.

## Description

### Technical field

The present invention relates to methods and devices for photon detection and more particularly to superconducting nanowire photon detector capable of single photon detection with reduced noise.

### Background of the invention

Nowadays many applications, such as quantum key distribution, optical free-space communication, or optical time-of-flight (TOF) measuring techniques, e.g. Optical Time-Domain Reflectometry (OTDR) or Light Detection and Ranging (LIDAR), require single photon detectors having high efficiency, high detection rates, low timing jitter and low noise. Superconducting nanowire single-photon detectors (SNSPDs) can achieve excellent performance in all these applications.

In this context, it is known that the simplest implementation of a SNSPD is based on a superconducting nanowire forming a single meander which is connected to bias current source and corresponding readout electronics. The detection rate of such a conventional single meander SNSPD is limited due to its recovery time, i.e. the time necessary for the detector to reach again a specified level of sensitivity to the detection of a single photon after a photon detection or a false count. It is clear to a person skilled in the art that a short recovery time implies that the detector can detect more photons in a given period of time, given that the sensitivity of the detector is reduced during its recovery time.

It is also known to the person skilled in the art that the recovery time of a single meander SNSPD is directly related to its kinetic inductance which increases monotonically with the length of the nanowire. Thus, reducing the kinetic inductance of a single meander SNSPD lowers its recovery time and allows to increase its detection rate.

The recovery time of a SNSPD may be further reduced by splitting a single meander nanowire in several smaller nanowire sections, called pixels, and connecting each of them, hence forming a multi-pixels SNSPD. This also applied when the pixels are connected in parallel, as in the P-SNSPDs. In this way, each pixel of the SNSPD is thinner than the nanowire of a corresponding single meander SNSPD and, therefore, each of the pixels has a smaller recovery time.

In the following, the term pixel is used to define each nanowire section defined above.

However, one major problem of these multi-pixels SNSPDs architecture is the thermal crosstalk. Once one of the pixels of the SNSPD is hit by a photon, it becomes resistive, i.e. is not in a superconductive state anymore, and the current flowing through such pixel creates heat.

The dissipation of such heat locally increases the temperature of neighboring pixels of the SNSPDs, hence generating a thermal crosstalk. In fact, such heat can be sufficient to make the neighboring pixel warm up and click, i.e. becoming resistive, thus generating false detections.

The macroscopic effect of thermal crosstalk is the generation of noise during measurement thereby rendering the measurements unclear. A technical effect of the elimination of thermal crosstalk is therefore to eliminate this additional noise, such as for example the after pulsing in a neighbour pixel, from the measurements.

The problem of thermal crosstalk is usually solved by spacing the pixels further than what would be optimal for a detector with the highest efficiency as well explained in Perrenoud, M., Caloz, M., Amri, E., Autebert, C., Schönenberger, C., Zbinden, H. and Bussières, F., 2021. Operation of parallel SNSPDs at high detection rates. Superconductor Science and Technology, 34(2), p.024002*.* and Craiciu, I., Korzh, B., Beyer, A.D., Mueller, A., Allmaras, J.P., Narváez, L., Spiropulu, M., Bumble, B., Leaner, T., Wollman, E.E. and Shaw, M.D., 2023. High-speed detection of 1550 nm single photons with superconducting nanowire detectors. Optica, 10(2), pp.183-190*.*

However, such spacing therefore implies reducing the density of pixels and can lead to a reduction in its efficiency.

Another solution is to properly characterize the detector in terms of thermal crosstalk probability and then bias it at a lower current to have negligible crosstalk as explained in Resta, G. V., Stasi, L., Perrenoud, M., El-Khoury, S., Brydges, T., Thew, R., Zbinden, H. and Bussières, F., 2023. Gigahertz Detection Rates and Dynamic Photon-Number Resolution with Superconducting Nanowire Arrays. Nano Letters*.*

However, this approach could have the downside of reducing the maximum system detection efficiency (SDE) that is achievable when the detector is operated at higher temperatures. In fact, lowering the bias current can results in a drop of the system detection efficiency. A last approach would be to properly characterize the delay between a photo-detection and the appearance of the thermal crosstalk noise and to filter out any detection that is occurring within this time window. However, this approach would also cause a reduction of the efficiency and achievable count-rate of the detector, as together with the noise you might filter-out also your signal.

In view of the above, there is a need to eliminate the thermal crosstalk without impacting the system detection efficiency of the detector. More particularly, there is a need for a system where the thermal crosstalk is eliminated while maintaining the same distance between adjacent pixels.

In addition, when a photon is extracted away from the nanowire region where the photon was absorbed heat is generated and it creates a resistive region where Joule heating occurs. This decreases the rate at which the nanowire can cool down after a detection, and it has been shown that it can lead to an increased detection efficiency for a larger range of bias currents.

Therefore, another advantage of the invention is to decrease the effectiveness with which the heat generated by the detection of one photon is extracted away from the nanowire region where the photon was absorbed. This decreases the rate at which the nanowire can cool down after a detection and leads to an increased detection efficiency for a larger range of bias currents (below the switching current of the device, also called critical current in some contexts). This can lead to devices that have a lessened sensitivity to bias current just below the switching current. This translates to a better fabrication yield, where the yield is defined in the probability for a detection to have a higher detection efficiency.

An object of the present invention is therefore to provide a photon detection system with an improved detection efficiency.

Another object of the present invention is therefore to provide a photon detection system capable of detecting single photons with reduced recovery time and without thermal crosstalk.

Another object of the present invention is therefore to provide a photon detection system capable of detecting single photons with reduced noise.

### Summary of the invention

The general principle of the present invention is based on the approach that the spacing between adjacent nanowires in a superconducting nanowire photon detector shall not be increased thereby not reducing its pixels density, i.e. its efficiency.

Instead, the general approach is to modify the structure of the multi-pixels superconducting nanowire photon detectors to eliminate the crosstalk while ensuring the same SDE of the detector.

More particularly, the general principle of the invention is to provide multi-pixels superconducting nanowire photon detectors, including P-SNSPDs where the pixels are connected in parallel, presenting trenches between the pixels, wherein such trenches are obtained through over etching the substrate between the nanowires of each pixel.

Thanks to the trenches, the heat created by the detection of one pixel must traverse a much longer path before being able to increase the temperature of an adjacent pixel, even though their distance is constant and has not changed. With such longer path, the heat is dissipated before the adjacent pixel is reached.

A first aspect of the invention therefore relates to a superconducting nanowire photon detector comprising a substrate, and a plurality of pixels provided on the substrate, wherein the pixels are separated from each other by a first linear distance, and characterized in that the substrate presents a concave surface profile between two pixels to present a length greater than the first linear distance.

Advantageously, the surface profile provides a heat conductive path between two pixels longer than the first linear distance.

In a preferred manner, the heat conductive path between two pixels is long enough to provide thermal insulation between two pixels.

Preferably, the surface profile presents a trench between two pixels.

In a preferred manner, the surface profile presents a projection underlying each pixel, wherein the projections are separated from each by the trench.

According to a preferred embodiment of the invention, the projection presents a height comprised in the range between 50 and 200 nm.

Advantageously, the projection presents a height of 75 nm.

Preferably, the substrate is made of SiO₂.

In a preferred manner, the substrate is connected to a cryostat and is a thermal sink.

Advantageously, the first linear distance is in the range from 60 to 150 nm.

Preferably, the superconducting Nanowire Photon Detector is a single photon Detector.

A second aspect of the invention therefore relates to a superconducting nanowire photon detector manufacturing method comprising the steps of providing a substrate, depositing superconducting layer (film) on top of a surface of the substrate, etching the superconducting layer to create a plurality of pixels separated by a first linear distance, and over etching the substrate to dig trenches between the pixels.

### Brief description of the drawings

The invention will be described with reference to the drawings, in which the same reference numerals indicate the same feature. In particular,
- Figure 1 is a Prior Art Figure showing a cross section of a conventional multipixel superconducting nanowire photon detector, and
- Figure 2 shows a cross section of a multipixel superconducting nanowire photon detector according to a first embodiment of the present invention;
- Figure 3 shows a cross section of a multipixel superconducting nanowire photon detector according to a second embodiment of the present invention.

### Detailed Description

The invention will be described, for better understanding, with reference to specific embodiments. It will however be understood that the invention is not limited to the embodiments herein described but is rather defined by the claims and encompasses all embodiments which are within the scope of the claims.

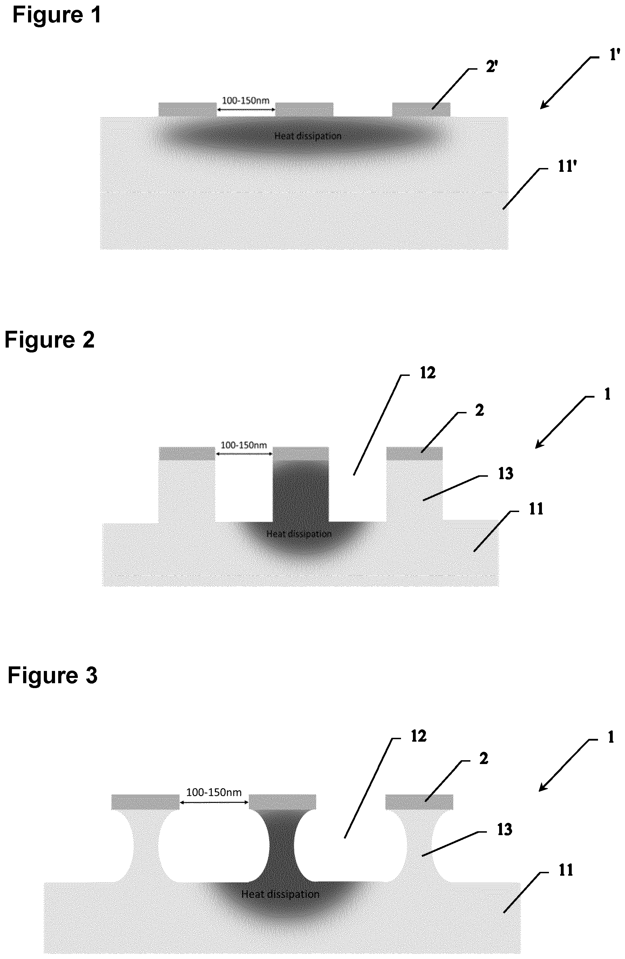

The present invention description is shown in figures 2 and 3.

On the other hand, Figure 1 shows a structure of a multi-pixels SNSPD according to the prior art.

As one can see, the pixels 2' are deposited on a substrate 11' of preferably SiO₂. The linear distance separating the pixels is in the range of 60-150 nm.

As shown in the figure, the heat generated by the detection of one photon by a pixel diffuses and can reach the neighboring pixels and cause them to click, i.e. to detect a false detection (false positive).

To prevent such thermal crosstalk, the present invention provides a multipixel superconducting nanowire photon detector with a longer heat path between the pixels without modifying the linear distance between the pixels.

More particularly, Figures 2 and 3 represent a structure of a multi-pixels Superconducting Nanowire Photon Detector 1 according to the present invention. As a preferred option, this multipixel superconducting nanowire photon detector 1 can be a superconducting nanowire single photon detector.

As one can see, in the present invention, the distance between two adjacent pixels 2 is similar to identical to distances between two pixels in prior art structures, i.e. in the range of 60-150 nm, but the substrate 11 on which the pixels are deposited is treated so as to dig or form trenches 12, preferably by over etching the surface of the substrate 11, hence forming trenches between adjacent pixels such that each pixel is provided on a projection 13 from the substrate 11. As a result, the trenches 12 create a concave surface profile between the two pixels 2 to present a length greater than said first linear distance and therefore a much longer path for the heat between two nanowires, while maintaining their separation distance constant.

The heat conductive path between two pixels 2 is therefore long enough to provide thermal insulation between two pixels 2.

As a consequence, thanks to these trenches 12, the heat generated by the detection of one pixel is dissipated through the substrate 11 forming the projection 13 underlying the pixel 2 instead of reaching the adjacent pixel 2.

Therefore, as shown in Figure 2, when the pixel 2 detects a photon, it becomes resistive and the current flowing through it generates heat. The heat is dissipated by the substrate that is connected to a cryostat and is a thermal sink. Since the path inside the substrate to reach the adjacent pixels is much longer compared to the MP-SNSPD of the prior art represented in Figure 1, the heat is dissipated inside the substrate and the pixels 1 and 3 maintain their temperature.

A second aspect of the invention is a fabrication method that allows to eliminate the thermal crosstalk effect between adjacent pixels, without increasing the spacing between adjacent pixels. Thus, not lowering the SDE of the detector.

During fabrication, the step of drastically over etching the nanowires and creating trenches between them is performed. The superconducting Nanowire Photon Detector manufacturing method of the present invention basically comprises the steps of providing a substrate, which in certain implementations includes a reflective structure and a cavity designed to enhance absorption on the superconducting layer (e.g. metal reflector, bragg reflector), depositing a superconducting layer(film), via physical vapor deposition (PVD) techniques, such as sputtering, superconducting layer(film) on top of a surface of said substrate (usually but not limited to SiO2), performing electron-beam lithography to define the structure of the nanowire on electron-sensitive polymer (electron beam resist), etching the superconducting layer so as to create a plurality of pixels separated by a first linear distance, and over etching the substrate so as to dig trenches between the pixels.

The SNSPD is finalized by Depositing and patterning a metal layer which provides electrical connect to the superconducting material and using deep-reactive ion etching (DRIE) to define the final shape of the superconducting nanowire photon detector.

The over etching step can be achieved in a variety of ways, as, but not necessarily limited to:
- Using thicker resist than in a conventional process (or a hard mask) to allow anisotropic over-etching of the substrate with the same reactive ion etching (RIE) process used to etch the nanowires. This is particularly shown in Fig 2.
- Adding a wet-etching step (such as with hydrofluoric acid (HF)) after the RIE used to define the nanowires, aiming at isotropic etching of the substrate providing a structured surface like the one shown in Fig 3.

## Claims

1. Superconducting Nanowire Photon Detector (1) comprising
a substrate (11), and
a plurality of pixels (2) provided on said substrate (11),
wherein the pixels (2) are separated from each other by a first linear distance, and
**characterized in that** said substrate presents a concave surface profile (12) between two pixels (2) to present a length greater than said first linear distance.

2. Superconducting Nanowire Photon Detector according to claim 1, **characterized in that** said surface profile (12) provides a heat conductive path between two pixels (2) longer than said first linear distance.

3. Superconducting Nanowire Photon Detector according to claim 1 or 2, **characterized in that** said heat conductive path between two pixels is long enough to provide thermal insulation between two pixels (2).

4. Superconducting Nanowire Photon Detector according to any one of claims 1 to 3, **characterized in that** said surface profile presents a trench (12) between two pixels (2).

5. Superconducting Nanowire Photon Detector according to claim 4, **characterized in that** said surface profile presents a projection (13) underlying each pixel (2), wherein the projections are separated from each by said trench (12).

6. Superconducting Nanowire Photon Detector according to claim 5, **characterized in that** said projection (13) presents a height comprised in the range between 50 and 200 nm.

7. Superconducting Nanowire Photon Detector according to claim 5 or 6, **characterized in that** said projection (13) presents a height of 75 nm.

8. Superconducting Nanowire Photon Detector according to any one of claims 1 to 6, **characterized in that** said substrate is made of SiO₂.

9. Superconducting Nanowire Photon Detector according to any one of claims 1 to 7, **characterized in that** said substrate is connected to a cryostat and is a thermal sink.

10. Photon Detector according to any one of claims 1 to 9, **characterized in that** said first linear distance is in the range from 60- to 150 nm.

11. Superconducting Nanowire Photon Detector according to any one of claims 1 to 10, **characterized in that** it is a single photon Detector.

12. Superconducting Nanowire Photon Detector manufacturing method comprising the steps of
Providing a substrate,
depositing superconducting layer on top of a surface of said substrate,
etching said superconducting layer to create a plurality of pixels separated by a first linear distance, and
over etching said substrate to dig trenches between said pixels.

13. Superconducting Nanowire Photon Detector manufacturing method according to claim 12, **characterized in that** said over etching step comprises using thick resist to allow anisotropic over-etching of the substrate with the same reactive ion etching process used to etch the nanowires.

14. Superconducting Nanowire Photon Detector manufacturing method according to claim 12, **characterized in that** said over etching step comprises adding a wet-etching step after the reactive ion etching used to define the nanowires, aiming at isotropic etching of the substrate.
